# EUROPEAN PATENT APPLICATION

(11) **EP 4 134 179 A1**
(43) Date of publication of application: **15.02.2023**
(21) Application number: 20941627.0
(22) Date of filing: 25.06.2020
(51) Int. Cl.: B09B 3/00, C08J 11/12, C08J 11/16, C10B 47/32

(54) **ORGANIC WASTE RECYCLING DEVICE, AND RECYCLING METHOD THEREFOR**

(71) Applicant: Act Co., Ltd., Ichinomiya-shi, Aichi 491-0071 (JP)
(72) Inventor: OKUMURA Akihisa, Ichinomiya-shi, Aichi 491-0071 (JP); SHIBATA Hideki, Kitanagoya-shi, Aichi 481-0006 (JP)
(74) Representative: Prüfer & Partner mbB Patentanwälte · Rechtsanwälte
(86) International application number: PCT/JP2020/024977
(87) International publication number: WO 2021/260875

(57) **Abstract**

This organic waste recycling device comprises: a catalyst for promoting the carbonization of an organic waste targeted for waste disposal; a UV irradiation means for irradiating UV at a wavelength capable of breaking a bond in a molecule constituting the organic waste; a processing target housing means whereof the interior space houses the catalyst; a heating means provided in the interior space; and a stirring means provided in the interior space. The organic waste is one that has undergone crushing into small pieces. The processing target housing means is such that the catalyst and the organic waste that has been UV-irradiated by the UV irradiation means and introduced into the interior space are in contact with one another and stirrable in this state by the stirring means.

## Description

### TECHNICAL FIELD

The present disclosure relates to an organic waste recycling apparatus of recycling a resin product targeted for waste disposal into a resource by carbonization and a recycling method therefor.

### BACKGROUND ART

For many of daily commodities, groceries, and others which are closely related to daily life, packaging materials such as bags and containers are widely used as resin products. Those resin-made packaging products become targets for waste disposal after finishing their roles. In recent years, resin products targeted for waste disposal are recovered through local municipalities and others for the purpose of recycling resources. Among all the recovered resin products, a part of them has been processed to be ready for recycling by a waste processing system disclosed in Patent Document 1, for example.

The Patent Document 1 describes a waste processing system of controlling inside a pressure-resistant container under a temperature of 200 to 270°C and a pressure of 2 to 5 MPa. In the pressure-resistant container, to-be-wasted plastics, which have been pulverized by stirring, are hydrolyzed by exposure to water vapor and then the hydrolyzed plastics are dried by dry air.

According to the Patent Document 1, in the waste processing system, the plastics put in the pressure-resistant container are applied with waste processing to an extent not to result in a pyrolysis processing or carbonization, so that the processed plastics can be reused as fuel, fertilizer, and others.

### RELATED ART DOCUMENTS

### PATENT DOCUMENTS

Patent Document 1: JP2017-131841A

### SUMMARY OF INVENTION

### PROBLEMS TO BE SOLVED BY THE INVENTION

Materials of the resin products to be wasted are various, and especially the materials such as polyethylene (PE) and polypropylene (PP) are widely used for resin products for various purposes like packaging materials such as containers and wrapping films in recent years. Accordingly, a waste amount of resin products made of polyethylene and others has been inevitably increasing, and thus the resin products recovered by the municipalities and others have also been increasing year by year. However, among the recovered resin products, in reality, an amount of actually-recycled resources remains only a small amount.

One reason for this is, in waste disposal of resin products, products made of polyethylene and polypropylene among resin materials are hard to be decomposed in view of their physical properties, and they are generally said to be difficult to apply waste disposal. On the other hand, in a case of the technique illustrated in the Patent Document 1, the to-be-wasted plastics are limited to resins such as polycarbonate (PC) and polyethylene terephthalate (PET) which have the physical property of generating hydrolysis. Accordingly, by the technique of the Patent Document 1, a resin product having the physical property of not generating hydrolysis such as wrapping materials made of polyethylene or the like cannot be processed for recycling.

Furthermore, in the waste disposal, among a large amount of recovered resin products, there is a case that resin products such as polycarbonate having the physical property of being relatively easy to be decomposed and resin products such as polyethylene having the physical property of being hard to be decomposed coexist. When such a group of resin products are to be recycled, the resin products in a dirty state is firstly washed in a washing device. After washing, the resin products that have been completely removed their dirt are classified into each material, and then regenerated as pellet-like raw materials by a recycling apparatus. Since such a complicated process is required, this leads to increase in processing cost, which has become a problem. This problem as a main reason results in less performance in recycling the actually-recovered resin products.

On the other hand, when the recovered resin products are disposed by incineration or disposed by declamation, there is a possibility of having a bad influence on human health and ecosystem, and introducing environmental pollution from a viewpoint of environment preservation and conserving resources. In other words, waste disposal of resin products by incineration and others is unpreferable. To address this, in order to achieve effective use of resources, there has been desired development of a disposal apparatus that can widely deal with materials of the recovered resin products at low cost.

The present disclosure has been made for solving the above problem and has a purpose of providing an organic waste recycling apparatus of easily recycling an organic waste targeted for waste disposal at low cost even when the waste includes resin products that are made of materials said to be difficult to decompose as exemplified with polyethylene, polypropylene, and others, and providing a recycling method therefor.

### MEANS OF SOLVING THE PROBLEMS

One aspect of the present disclosure for solving the above problem is an organic waste recycling apparatus comprising: a catalyst to make carbonization of an organic waste targeted for waste disposal; an ultraviolet irradiation member configured to irradiate ultraviolet at a wavelength which is enough for breaking bonding of molecules configuring the organic waste; a processed object housing member housed its interior space with the catalyst; a heating member provided in the interior space; and a stirring member provided in the interior space, wherein, the organic waste is crushed into small pieces, the catalyst is formed under a temperature of 160 to 200°C by sulfonation treatment of any one of: a first mixture formed of at least any one of granular activated charcoal, carbon powder, and Binchotan charcoal mixed with any one of concentrated sulfuric acid and oleum, and a second mixture formed of a chip of wood, of which outer layer is intermolecularly dehydrated, mixed with any one of the concentrated sulfuric acid and the oleum, and in the processed object housing member, the organic waste after ultraviolet irradiation by the ultraviolet irradiation member and the catalyst, which are carried in the interior space, are in contact with each other to be stirred by the stirring member.

According to this aspect, a collection of organic wastes to be recycled may include easy-to-be-decomposed resin materials having the physical property of being relatively easy to decompose their configuring molecules among resins such as polycarbonate (PC), polystyrene (PS), polyamide (PA), and others. Further, as raised by polyethylene (PE), polypropylene (PP), polyethylene terephthalate (PET), and others, there might be included difficult-to-be-decomposed resin materials having the physical property of being relatively difficult to decompose their configuring molecules among resins. Even in the collection of the organic wastes in which those easy-to-be-decomposed resin materials and the difficult-to-be-decomposed resin materials coexist, the organic wastes can be crushed to turn into a product of carbon powder or the like as a collection of carbon in a powder form as one material of recycling.

Furthermore, with no regard to types of resin materials, the organic waste as it is can be easily turned into a product of carbon powder or the like by processing with the organic waste recycling apparatus according to one aspect of the present disclosure. In addition, the product of the carbon powder or the like can be formed only by processing the organic waste by use of the organic waste recycling apparatus according to the one aspect of the present disclosure, resulting in remarkable reduction in cost for processing the organic waste.

In the above aspect, preferably, as an arrangement configuration of the organic waste that receives the ultraviolet from the ultraviolet irradiation member, the device comprises an arrangement adjusting member configured to adjust the arrangement configuration of the organic waste to be supplied to the ultraviolet irradiation member to any one of a single-layered state and a laminated state by two layers at most by overlapping the organic wastes.

According to this aspect, when the organic waste supplied to the ultraviolet irradiation member is to be decomposed its configuring molecules, the ultraviolet can be assuredly irradiated on surfaces of the pulverized organic wastes with restraining irradiation loss.

In the above aspect, preferably, the apparatus comprises a first conveyance member configured to feed the organic waste through a first conveyance path, and the ultraviolet irradiation member extends along the first conveyance path.

According to this aspect, when the organic waste is to be recycled to form the above-mentioned product, irradiation of the ultraviolet to the organic wastes and formation of the product in the interior space of the processed object housing member can be smoothly and successively performed.

In the above aspect, preferably, the processed object housing member is provided with a product discharge portion formed of an enveloping member of a tubular shape centering about an axis extending in a horizontal direction, the enveloping member is configured to obstruct circulation of the catalyst but includes a clearance formed large enough to allow circulation of a product generated by reaction of the organic waste after the ultraviolet irradiation and the catalyst in the interior space, and as a second conveyance path, a second conveyance member configured to deliver the product outside the processed object housing member is provided inside the enveloping member.

According to this aspect, when the above-mentioned product formed in the interior space is to be discharged outside the processed object housing member, the catalyst remaining in the interior space and the product can be accurately and easily divided by the product discharge portion configured with such a simple configuration.

In the above aspect, preferably, the organic waste is a resin product which has become an object to be wasted.

According to this aspect, the organic waste recycling apparatus according to the present disclosure can be used in various facilities which requires formation of the above-mentioned product from the organic waste as facilities aiming for recycling resources, for example, facilities recovering wastes mainly through local municipalities and supermarkets and facilities of food makers, various industrial manufacturers, and others which perform processing at their own plants. As a result of this, the organic waste recycling apparatus according to the present disclosure can largely contribute to recycling more resin products among resin products targeted for waste disposal, a large amount of which are recovered by local municipalities and others.

Further, another aspect of the present disclosure for solving the above problem is an organic waste recycling method of recycling an organic waste targeted for waste disposal by use of a catalyst for making carbonization, the method includes: a first step of continuously irradiating ultraviolet on the organic waste that has been pulverized at a wavelength which is enough for breaking bonding of molecules configuring the organic waste for a first predetermined period of time, a second step of supplying the organic waste after irradiation of the ultraviolet in the first step to an interior space of a processed object housing member and continuously stirring the organic waste after ultraviolet irradiation and the catalyst in the interior space for a second predetermined period of time under a heated condition of the interior space at an ambient temperature in a temperature zone of 80 to 200°C, and a third step of discharging a product formed by reaction of the organic waste and the catalyst in the second step to outside the processed object housing member, and the catalyst is formed under a temperature of 160 to 200°C by sulfonation treatment of any one of: a first mixture of any one of granular activated charcoal, carbon powder, and Binchotan charcoal mixed with any one of concentrated sulfuric acid and oleum; and a second mixture of a chip of wood, of which an outer layer is intramolecularly dehydrated, mixed with any one of concentrated sulfuric acid and oleum.

According to this aspect, a collection of the organic wastes to be recycled may include, for example, easy-to-be-decomposed resin material having the physical property of being relatively easy to decompose its configuring molecules among resins such as polycarbonate (PC), polystyrene (PS), polyamide (PA), and others. Further, for example, there may be included difficult-to-be-decomposed resin material having the physical property of being relatively difficult to decompose its configuring molecules among resins such as polyethylene (PE), polypropylene (PP), polyethylene terephthalate (PET), and others. Even in the collection of the organic wastes in which the easy-to-be-decomposed resin material and the difficult-to-be-decomposed resin material coexist, the organic waste can be crushed into a product of carbon powder or the like as a collection of powdery carbon and can be recycled as one of materials.

Furthermore, with no regard to types of resin materials, the organic waste may be processed in its state as it is, and easily turned into the product of the carbon powder or the like based on the organic waste recycling method according to another aspect of the preset disclosure. In addition, the product of the carbon powder or the like can be formed simply by processing the organic waste by the organic waste recycling method according to another aspect of the present disclosure, and thus the processing cost of the organic waste is incredibly inexpensive.

In the above aspect, preferably, the organic waste is a resin product targeted for waste disposal.

According to this aspect, the organic waste recycling method according to the present disclosure can be used in various facilities requiring formation of the above-mentioned products from the organic waste as a facility for recycling resources such as facilities recovering the wastes mainly through local municipalities, supermarkets, and others and facilities in food makers, various industrial manufacturers, and others which perform processing of the wastes at their own plants. As a result of this, the organic waste recycling apparatus according to the present disclosure can largely contribute to recycling more resin products from the to-be-wasted resin products which are recovered at a large amount by the municipalities and others.

### EFFECTS OF THE INVENTION

Therefore, the organic waste recycling apparatus and the recycling method therefor according to the present disclosure have remarkable effect of easily and inexpensively recycling the to-be-wasted organic waste even when the waste includes a resin product made of the material having the physical property of being difficult to be decomposed as exemplified with polyethylene, polypropylene and the like.

### BRIEF DESCRIPTION OF THE DRAWINGS

FIG. 1 is an explanatory view showing a front-side schematic view of an entire organic waste recycling apparatus of an embodiment;
FIG. 2 is a plan view of a device main unit of the organic waste recycling apparatus in FIG. 1 omitted with a top plate, catalyst, and others;
FIG. 3 is a sectional view taken along a line A-A in FIG. 2;
FIG. 4 is an explanatory view of a product discharge portion provided in the device main unit in FIG. 2;
FIG. 5 is an enlarged view of a part B in FIG. 4, explaining action of the product discharge portion;
FIG. 6 is a view showing an ultraviolet irradiation portion of the organic waste recycling apparatus in FIG. 1;
FIG. 7 is a view seen from an arrow C-C in FIG. 6, showing a state of irradiating ultraviolet on a waste processed object placed on a conveyance surface of a feeding conveyor;
FIG. 8 is a front-side view of the ultraviolet irradiation portion in FIG. 1 as a continuation of FIG. 7;
FIG. 9 is a diagram showing a state of mixing the waste processed object and the catalyst by stirring in an interior space of a processed object housing body in the device main unit in FIG. 1;
FIG. 10 is a table showing a determination reference of a result of inspection experiments for confirming effects of an organic waste recycling method in the embodiment; and
FIG. 11 is a table showing results of the inspection experiments as a continuation of FIG. 10.

### MODE FOR CARRYING OUT THE DISCLOSURE

One preferable embodiment of an organic waste recycling apparatus and a recycling method therefor according to the present disclosure is explained below with reference to the accompanying drawings.

The organic waste recycling apparatus according to the present disclosure is a processing apparatus of turning an organic waste targeted for waste disposal into resources. The organic waste is, in the present embodiment, a resin-made waste that has become a target to be wasted. The resin-made waste includes various resin-made products that have finished with their function of the products and have become targets for waste disposal such as an empty bottle in which liquid of drinking water or the like was filled in, a container which has housed an industrial product, a bag packed with groceries or the like purchased in a shop, and wrapping material which has been wrapping housewares.

In recent years, resin-made wastes are recovered in predetermined facilities manly through local municipalities. The organic waste recycling apparatus according to the present embodiment (hereinafter, simply referred as a "recycling apparatus") is used in those facilities as destinations of recovering the organic wastes. The resin-made wastes may sometimes be in a coexisting state of including both the resin-made products having the physical property of being difficult to be decomposed such as polyethylene (PE), polypropylene (PP), and polyethylene terephthalate (PET) and the resin-made products having the physical property of being relatively easy to be decomposed such as polycarbonate (PC) and others.

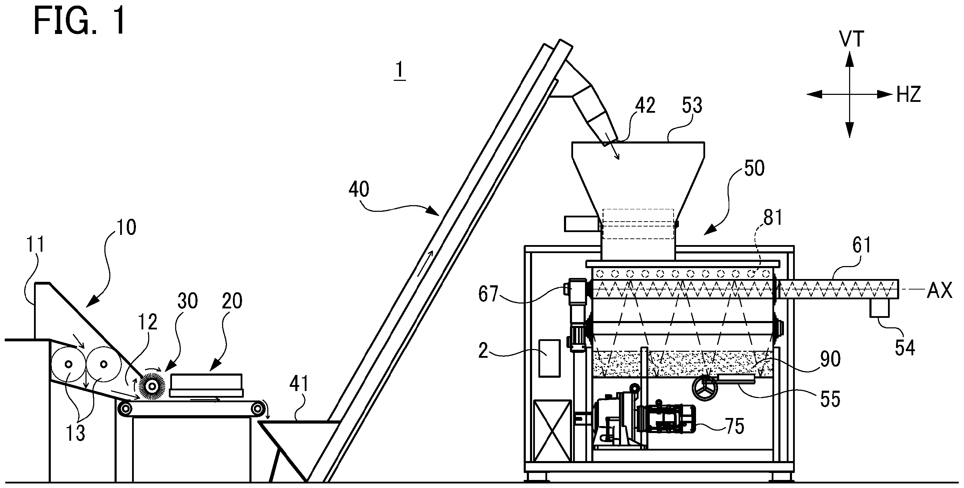

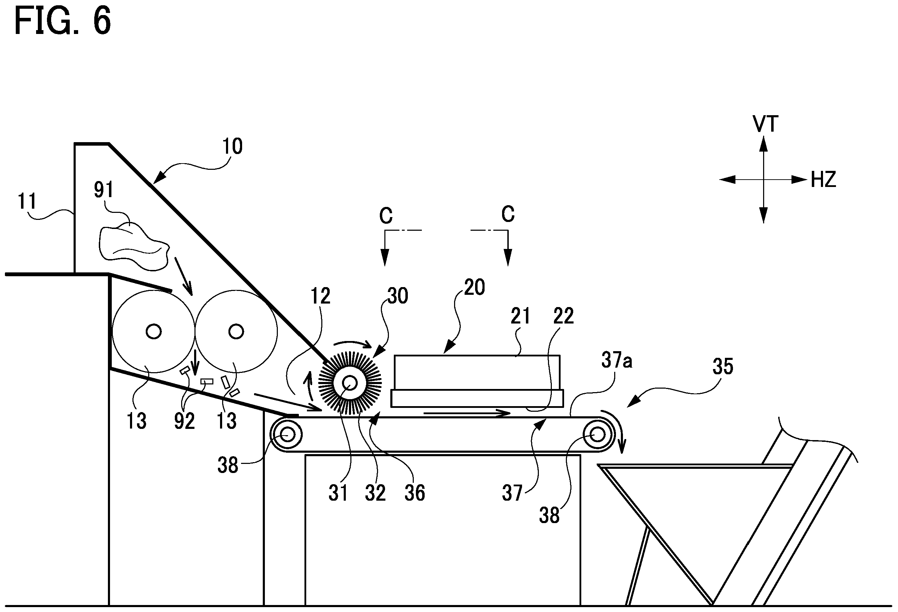

Firstly, the organic waste recycling apparatus according to the present disclosure is explained. FIG. 1 is an explanatory view schematically illustrating a front side of an entire recycling apparatus according to an embodiment. FIG. 6 is a view showing an ultraviolet irradiation unit of the recycling device in FIG. 1.

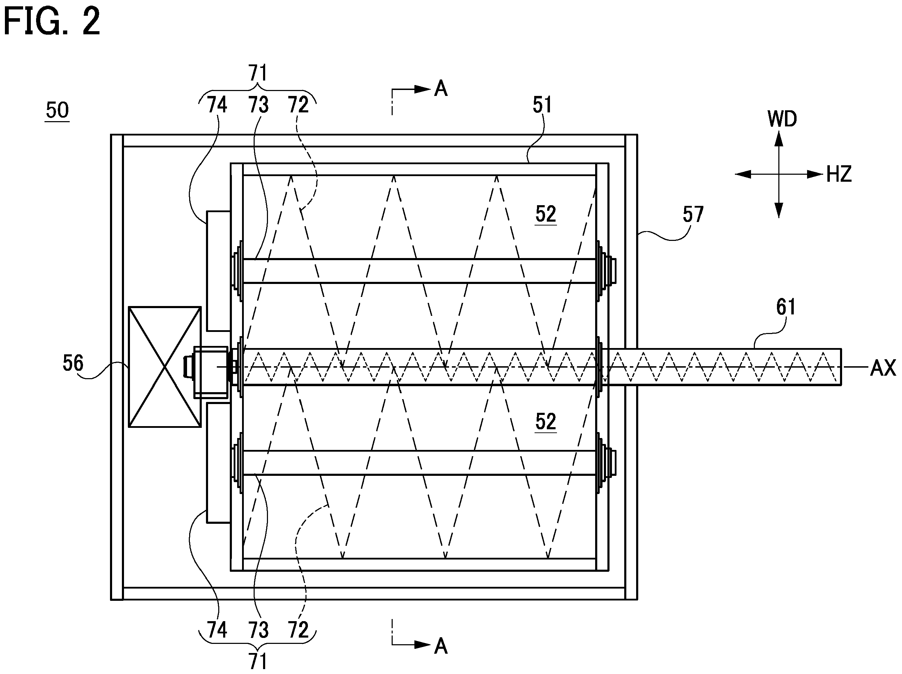

In FIG. 1, a left side in a left and right direction is defined as an upstream side in a feeding direction (a horizontal direction) HZ, a right side is defined as a downstream side in the feeding direction HZ, and an upper and lower direction is defined as a vertical direction VT. Further, a direction vertical to a paper plane in FIG. 1 is defined as a width direction WD. These definitions are also applicable to drawings of FIG. 2 and thereafter.

As shown in FIG. 1, a recycling apparatus 1 is broadly provided with a control unit 2, a crushing device 10, an ultraviolet irradiation device 20, a conveyance device 40, and a device main unit 50, and the apparatus is able to serially perform processing under automatic operation. In the recycling apparatus 1, the crushing device 10, the ultraviolet irradiation device 20, the conveyance device 40, and the device main unit 50 are set in a manufacturing line and operated all together.

As shown in FIG. 6, the crushing device 10 is provided with a pair of crushing blades 13 which are rotatable in opposite directions from each other. The pair of crushing blades 13 are blade members configured to be meshed each other to crush waste resin products 91 (the resin-made wastes) conveyed from a first carry-in port 11 into fine small pieces. Waste processed objects 92 which have been formed by crushing the waste resin products 91 by the crushing blades 13 are formed small enough to have a thickness about 1 mm or less and a length about 10 mm to the most, for example. The waste processed objects 92 are fed out through a first carry-out port 12 to be supplied to the ultraviolet irradiation device 20.

As shown in FIG. 6, the ultraviolet irradiation device 20 is provided with an arrangement adjusting device 30 (an arrangement adjusting member), an ultraviolet irradiation unit 21 (an ultraviolet irradiation member), and a feeding conveyor 35 (a first conveyance member). The feeding conveyor 35 is a known belt conveyor extending in the horizontal direction HZ. In the feeding conveyor 35, an annular belt 37 is bridged over two pulleys 38 provided to be separated from each other. The belt 37 is allowed to continuously run by circulating between the two pulleys 38 to the downstream side in the feeding direction HZ in association with rotation of the pulleys 38 based on a motive power of a not-shown drive source.

A conveyance surface 37a of the belt 37 constitutes a first conveyance path 36 (a first conveyance path) for feeding the placed waste processed objects 92. On the feeding conveyor 35, the arrangement adjusting device 30 and the ultraviolet irradiation unit 21 are provided.

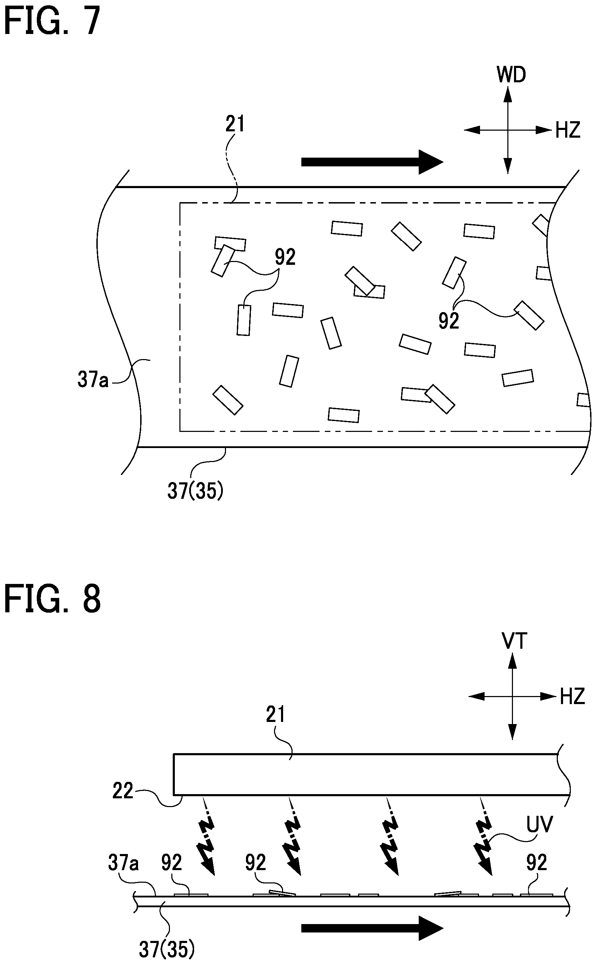

FIG. 7 is a view showing a state in which the waste processed object placed on a conveyance surface of the feeding conveyor is irradiated with ultraviolet when seen from a side of an arrow C-C in FIG. 6, and FIG. 8 is a view of the ultraviolet irradiation unit when seen from a front side of the unit shown in FIG. 1.

As shown in FIG. 7 and FIG. 8, the arrangement adjusting device 30 is a device of adjusting the placement of the waste processed objects 92, which are to be supplied to the ultraviolet irradiation unit 21 to be in a single-layered state or a laminated state by two layers at most of the overlapped waste processed objects 92. The arrangement adjusting device 30 is provided with brushes 32 which radially extend about a rotatable axis 31 and are intermittently formed around an entire circumferential direction of the axis 31 as shown in FIG. 6 in the present embodiment.

The brushes 32 have elastically deformable flexibility. The brushes 32 randomly spread and sweep out the waste processed objects 92 that are successively carried out from the first carry-out port 12 of the crushing device 10 to a conveyance surface 37a of the feeding conveyor 35 on an upstream side of the ultraviolet irradiation unit 21 by rotation movement of the axis 31 based on the motive power of a not-shown drive source. The waste processed objects 92 swept out by the brushes 32 are in the single-layered state or in the laminated state of two layers at most as an allowable range of an arrangement state of the objects placed on the conveyance surface 37a even when the waste processed objects 92 are overlapped.

As shown in FIG. 6, the ultraviolet irradiation unit 21 extends along the first conveyance path 36 and is set above the conveyance surface 37a of the belt 37 in the present embodiment. An ultraviolet irradiation surface 22 of the ultraviolet irradiation unit 21 is placed with facing the belt 37 at a position spaced apart by a predetermined distance from the conveyance surface 37a of the belt 37.

Herein, the ultraviolet irradiation unit 21 may be placed on both sides in the vertical direction VT of the first conveyance path 36. However, when the first conveyance path constitutes the conveyance surface 37a of the belt 37 as the present embodiment, the waste processed object placed on the first conveyance path cannot receive the ultraviolet irradiated from a side below the first conveyance path.

When the ultraviolet irradiation units 21 are set on both sides in the vertical direction VT of the first conveyance path 36, instead of the belt 37, the first conveyance path needs to be configured by an element that can transmit the ultraviolet of enough irradiance to be received by the waste processed object such as a net element having a mesh structure, for example.

The ultraviolet irradiation unit 21 irradiates ultraviolet UV from the ultraviolet irradiation surface 22 at a specified wavelength λ that is enough for breaking bonding of molecules constituting the waste processed objects 92. To be specific, the ultraviolet irradiation unit 21 radiates the ultraviolet UV at the elected specified wavelength λ within an ultraviolet band of 100 to 400 nm and is configured to control irradiance of the ultraviolet UV corresponding to the specified wavelength λ.

Herein, a relation of the specified wavelength λ and its irradiance is explained for each light source of the ultraviolet UV. For example, when the light source is a low-pressure mercury lamp, the specified wavelength λ is 254 (nm) and the irradiance is several tens of watts per square meter (mW / cm²). Further, when the light source is an excimer lamp, the specified wavelength λ is 172 (nm) and the irradiance is several tens of watts per square meter (mW / cm²).

Further, when the light source is a mercury lamp, the specified wavelength λ is 254 (nm), 313 (nm), and 365 (nm) and the irradiance is several tens to several hundreds of watts per square meter (mW / cm²). Further, when the light source is an ultraviolet LED illuminator, the specified wavelength λ is 280 (nm), 313 (nm), 365 (nm), and 395 (nm) and the irradiance is several tens to several hundreds of watts per square meter (mW / cm²).

The waste processed objects 92 after irradiation of the ultraviolet UV are continuously moved by the feeding conveyor 35 to be supplied to a second carry-in port 41 of the conveyance device 40 from an end portion of the first conveyance path 36 on the downstream side of the ultraviolet irradiation unit 21. The conveyance device 40 is a conveyor to convey the post-ultraviolet-UV-irradiated waste processed objects 92 that has been housed in the second carry-in port 41 toward the second carry-out port 42 that is provided adjacent to a third carry-in port 53 of the device main body 50 under serial operation as shown in FIG. 1.

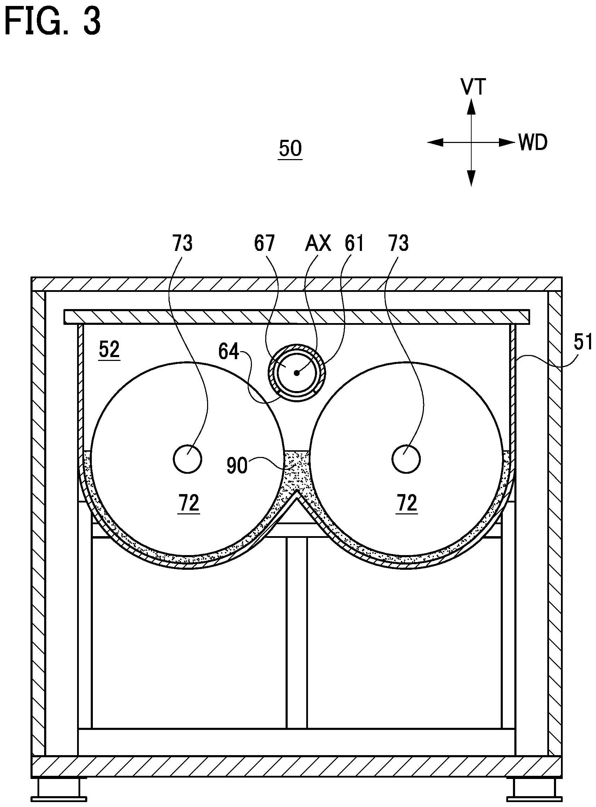

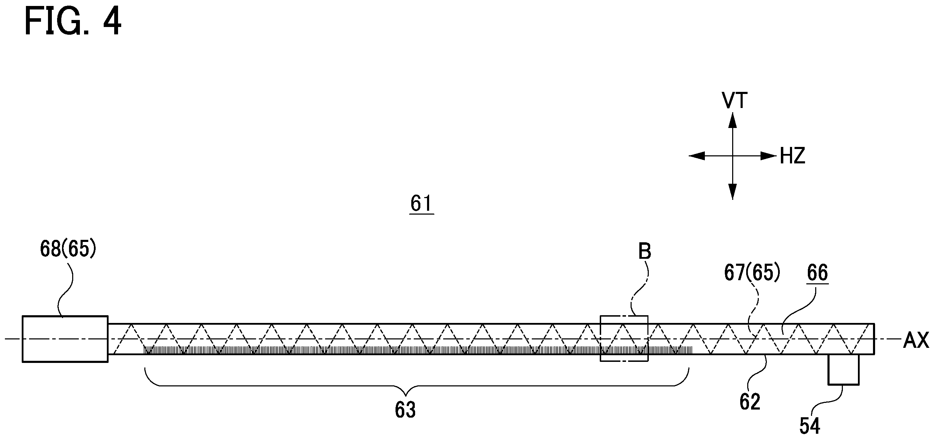

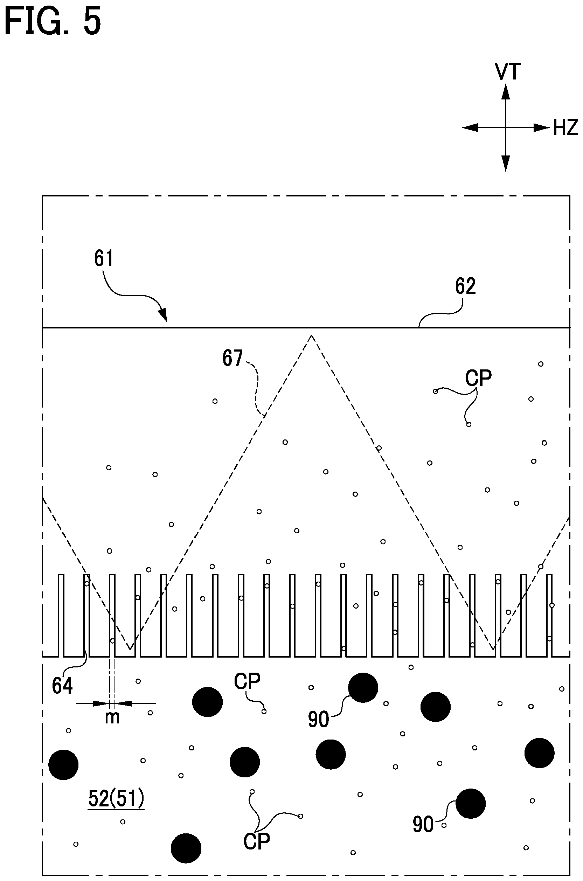

Next, the device main unit 50 is explained with reference to FIG. 1 to FIG. 5. FIG. 2 is a plan view of the device main unit of the recycling apparatus shown in FIG. 1, omitted with a top plate, the catalyst, and the like. FIG. 3 is a sectional view taken along a line A-A in FIG. 2. FIG. 4 is an explanatory view of a product discharge portion of the device main unit shown in FIG. 2. FIG. 5 is an enlarged view of a part B in FIG. 4 for explaining action of the product discharge portion.

The device main unit 50 is provided with a processed object housing body 51 (a processed object housing member), a product discharge portion 61, a stirring portion 71 (a stirring member), a heater 81 (a heating member), and others. In the device main unit 50, the processed object housing body 51 and others are covered with a cover 57. The processed object housing body 51 includes an interior space 52 configured to accommodate a catalyst 90 explained below and the waste processed objects 92.

In an upper portion of the processed object housing body 51, the third carry-in port 53 is provided to be communicated with the interior space 52. Thus, the waste processed objects 92 after irradiation of the ultraviolet UV are supplied to the third carry-in port 53 from the second carry-out port 42 of the conveyance device 40, and then these waste processed objects 92 are made to be accommodated in the interior space 52 of the processed object housing body 51.

Further, as shown in FIG. 1, the heater 81 is provided in the interior space 52 of the processed object housing body 51. The heater 81 is, for example, a heat source which can increase the ambient temperature in the interior space 52 to over 200°C, for example, by an infrared heater and others.

A lower part of the processed object housing body 51 is configured as a bottom portion formed of two curved bottom plates arranged in parallel as shown in FIG. 2 and FIG. 3. In a bottom part of the processed object housing body 51, a drain 55 is provided. The drain 55 mainly discharges water vapor generated by the reaction of the waste processed objects 92 and the catalyst 90 to outside the interior space 52.

In the interior space 52, two stirring portions 71 are provided in parallel to face the bottom plates of the processed object housing body 51, respectively. Each of the stirring portions 71 is a unit of stirring the housed waste processed objects 92 and the catalyst 90 in the interior space 52. The stirring portions 71 are each formed with spirally formed stirring blades 72 connected to a shaft 73 as a center of the spiral shape.

In the stirring portions 71, the shafts 73 rotated in association with rotation of the pulleys 74 based on the motive power of a drive motor 75, and the stirring blades 72 are allowed to rotate based on the rotation movement of the shafts 73. The drive motor 75 is a motor for low-speed rotation that can freely change a rotation number of an output shaft and a rotation direction of the output shaft by the inverter control and that has the characteristics of presenting high torque at the time of low-speed rotation.

The device main unit 50 is provided with a deodorizing portion 56. The deodorizing portion 56 is to remove unpleasant smell generated by the reaction of the waste processed objects 92 and the catalyst 90 in the interior space 52 of the processed object housing body 51 through a filter.

As shown in FIG. 1 to FIG. 5, the processed object housing body 51 is provided with the product discharge portion 61. The product discharge portion 61 is provided with, as shown in FIG. 5, an enveloping member 62, a screw conveyor 65 (a second conveyance member), and others. The product discharge portion 61 is placed in an upper part of the interior space 52 as shown in FIG. 3 between the adjacent two stirring blades 72.

The enveloping member 62 is, as shown in FIG. 3 and FIG. 4, formed cylindrically about an axis AX extending in the horizontal direction HZ in the processed object housing body 51. On one end side (a left side in FIG. 4) relative to the axis AX, the third carry-out port 54 is provided. The third carry-out port 54 is placed outside the interior space 52 and formed of a hollow element connected curvedly with the enveloping member 62. The other end side (a left side in FIG. 4) of the enveloping member 62 is joined to a drive motor 68 outside the interior space 52.

The enveloping member 62 is, as shown in FIG. 1 to FIG. 3, formed to pass through the interior space 52 and extends to one end side (a right side in FIG. 1 and FIG. 2) of the processed object housing body 51. A communication range 63 of the enveloping member 62 positioned in the interior space 52 is intermittently formed with a plurality of slits 64 as shown in FIG. 4 and FIG. 5. The communication range 63 is configured to communicate inside and outside of the enveloping member 62 by these slits 64.

As shown in FIG. 5, an interval m (0 < m) of the slits 64 is a clearance set large enough to allow carbon powder CP (formed object) of a desired size, which is generated by the reaction of the waste processed objects 92 with the catalyst 90, to pass through but to prevent the catalyst 90 from passing as explained below. The communication range 63 is formed in an arc shape on a partial portion of an entire circumference of the enveloping member 62 such as a portion corresponding to a portion below the axis AX.

An inside of the enveloping member 62 is provided with a screw conveyor 65. The screw conveyor 65 is, as shown in FIG. 4, provided with a screw 67, a drive motor 68, and others. As shown in FIG. 4, the screw 67 spirally extends along the axis AX of the enveloping member 62 to be rotated based on the motive power of the drive motor 68.

Specifically, the screw conveyor 65 feeds the carbon powder CP, which was captured inside the enveloping member 62 as the second conveyance passage 66 through the slits 64, toward the third carry-out port 54. Thus, the carbon powder CP captured inside the enveloping member 62 can be discharged through the third carry-out port 54 to outside the device main unit 50.

The control unit 2 takes a role of electric control of the entire recycling apparatus 1. Control operation by the control unit 2 specifically includes, for example, rotation control of the crushing blades 13 of the crushing device 10, rotation control of the pulleys 38 of the feeding conveyor 35, motive control of the conveyance device 40, rotation control of the drive motor 68 of the screw conveyor 65, rotation control of the drive motor 75 of the stirring section 71, heating control of the heater 81 based on the preset ambient temperature of the interior space 52, control of reaction time of the waste processed objects 92 and the catalyst 90, and others.

Other than that, the control unit 2 has a function of controlling transfer speed of the waste processed objects 92 which has been kept transferred by the feeding conveyor 35 in response to an actual time required for irradiation of the ultraviolet UV by the ultraviolet irradiation unit 21.

Next, the catalyst 90 is explained. The catalyst 90 is formed by sulfonation treatment of a first mixture or a second mixture explained below under a temperature of 160 to 200°C. The first mixture is formed by mixing at least one of materials of granular activated charcoal, carbon powder and Binchotan charcoal with concentrated sulfuric acid or oleum. The second mixture is formed by mixing a chip of wood, of which an outer layer is intermolecularly dehydrated with the concentrated sulfuric acid or oleum. Other than resin products such as the waste processed objects 92, as exemplified with vegetables and fruits, sea foods, meats and bones of chicken or the like, chip of wood such as disposable chopsticks, the catalyst 90 has the characteristics of making carbonization of organic waste products targeted for waste disposal.

Next, a recycling method of organic waste according to the present embodiment is explained with raising the recycling apparatus 1 as one example. In the recycling method of the organic waste according to the present embodiment, the organic waste is the waste processed object 92 (resin product) that has become a target for waste disposal.

The recycling method of the organic waste according to the present embodiment includes a first step, a second step, and a third step for recycling the waste processed object 92 by use of the catalyst 90 for making carbonization.

The first step is a step of continuously irradiating the ultraviolet UV at the wavelength λ, at which the bonding of molecules configuring the waste processed object 92 can be broken, onto the crushed waste processed object 92 for a first predetermined time T1.

The second step is carried out after the first step. In the second step, the waste processed object 92 after irradiation of the ultraviolet UV is supplied to the interior space 52 of the processed object housing body 51, and the waste processed object 92 after irradiation of the ultraviolet UV and the catalyst 90 are continuously stirred in the interior space 52 by the stirring blades 72 for a specified second predetermined time T2 under a condition that the ambient temperature in the interior space 52 is heated by the heater 81 within the temperature zone of 80 to 200°C.

The third step is a step of discharging the carbon powder CP and water as a formed product generated by the reaction of the waste processed object 92 and the catalyst 90 by performing the prior second step to outside the processed object housing body 51.

Here is a detailed explanation. Some waste resin products 91 are made of easy-to-be-decomposed resin that has physical property of being relatively easy to decompose their configuring molecules among resins such as polycarbonate (PC), polystyrene (PS), and polyamide (PA). On the other hand, some waste resin products 91 are made of difficult-to-be decomposed resin that has physical property of being relatively difficult to decompose configuring molecules among resins such as polyethylene (PE), polypropylene (PP), and polyethylene terephthalate (PET).

The waste processed objects 92 are, as shown in FIG. 7 and FIG. 8, placed by the arrangement adjusting device 30 on the conveyance surface 37a of the belt 37 of the feeding conveyor 35 (the first conveyance path 36) in an arrangement within the above-mentioned allowable range.

During operation of the feeding conveyor 35, the waste processed objects 92 on the conveyance surface 37a pass below the ultraviolet irradiation surface 22 of the ultraviolet irradiation unit 21 from an upstream side in the feeding direction HZ and are fed to the downstream side of the first conveyance path 36. The ultraviolet irradiation unit 21 keeps irradiating the ultraviolet UV from the ultraviolet irradiation surface 22 onto the waste processed objects 92 on the conveyance surface 37a as shown in FIG. 8.

The first step is performed for the purpose of mainly decomposing molecules that form the difficult-to-be-decomposed resin material to some extent or completely. In the first step, the first predetermined time T1 is a period of time while the waste processed objects 92 in the running state continuously receive the ultraviolet UV from the ultraviolet irradiation surface 22 until the waste processed objects 92 have completely passed below the ultraviolet irradiation surface 22.

The first predetermined time T1 is a term of continuously irradiating the ultraviolet UV for ensuring enough irradiation energy amount of the ultraviolet UV, which is required for releasing bonding both of carbon atom of a molecule structure of the waste processed object 92 (resin product) and objective atom (or molecule) bonded with carbon atom by covalent bonding for the purpose of decomposing molecules configuring the waste processed objects 92.

The irradiation energy amount of the ultraviolet UV is an integral of light (mJ / cm²) as a product of irradiance (mW / cm²) of the ultraviolet UV irradiated from the ultraviolet irradiation surface 22 by the ultraviolet irradiation unit 21 and irradiation time (sec.) of keeping irradiating the ultraviolet UV. Accordingly, in the first step, the first predetermined time T1 is set as an irradiation time of the ultraviolet UV calculated based on the integral of light and irradiance of the required ultraviolet UV for the purpose of decomposing the molecules of the difficult-to-be-decomposed resin material configuring the waste processed objects 92.

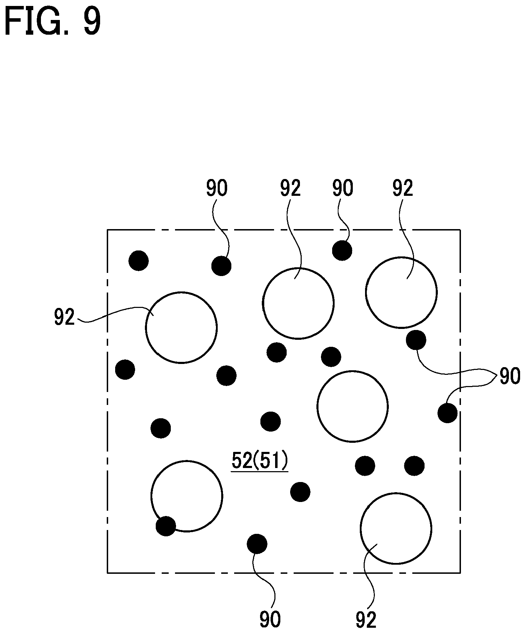

FIG. 9 is a diagram showing the interior space of the processed object housing body of the device main unit shown in FIG. 1, in which the waste processed objects and the catalyst are mixed by stirring. In the second step, the waste processed objects 92 of the difficult-to-be-decomposed resin material which has been decomposed the molecules in the first step, the wasted processed objects 92 of the easy-to-be-decomposed resin material and the catalyst 90 are firstly housed in the interior space 52 of the processed object housing body 51.

A molecule configuring an organic compound generally has a structure including hydrogen atom, carbon atom, oxygen atom, nitrogen atom, and others. A frame of the configuring molecule of the organic compound is configured with the carbon atom as a main component which is bonded with hydrogen atom, oxygen atom, nitrogen atom, and other atoms by covalent bonding. In the covalent bonding of the carbon atom and other atoms, electronegativity of other atoms especially such as the oxygen atom and the nitrogen atom is larger than that of the carbon atom. Accordingly, this difference in the electronegativity has influence on causing inducing effect of collection of electrons leaning to a side of an atomic nucleus of other atoms between the carbon atom and other atoms. The organic compound having the inducing effect has polarity.

The catalyst 90 is suitable for an organic compound having a polarity. The catalyst 90 lowers density of electrons existing on a side of a carbon atom by leading a collection of electrons, which is covalently bonded between the carbon atom and other atoms, to a side of atomic nucleus of other atoms. The catalyst 90 is thus a catalyst having a function of separating other atoms bonded to a main carbon atom. This catalyst 90 is brought into direct contact with the waste processed objects 92 by stirring in the interior space 52 under a heated temperature of 80 to 200°C as shown in FIG. 9, and thus the following chemical reaction occurs between the waste processed objects 92 and the catalyst 90.

Specifically, as atoms covalently bonded to the main carbon atom in the structure of configuring molecules of the waste processed object 92, for example, the hydrogen atom, the oxygen atom, the nitrogen atom, and others are separated from the carbon atom by the catalyst 90. The thus separated hydrogen atom makes reaction with atom of oxygen existing in the air to form water vapor (water). Further the separated oxygen atom and the separated nitrogen atom are released to the atmosphere as oxygen molecules and nitrogen molecules, respectively. The remaining carbon atoms are altered their forms to the carbon powder CP (the formed product) as a collection of powder-shaped carbon to become a material as one resource.

The second predetermined time in the second step is a period of time required for segmentalizing the collection of the formed powder-shaped carbon into the carbon powder CP at a size of which the carbon powder can pass through the clearance m of the slits 64 of the product discharge portion 61. When the carbon powder CP is segmentalized to a size small enough to pass through the clearance m, the carbon powder CP can be easily used as a material for various industries.

By performing the second step, the waste processed objects 92 and the catalyst 90 are stirred and the formed carbon powder CP are soared up in the interior space 52 of the processed object housing body 51. In the third step, as shown in FIG. 5, the soared carbon powder CP is captured in the second conveyance path 66 inside the enveloping member 62 through the slits 64 of the communication range 63 in the product discharge portion 61. In the product discharge portion 61, the captured carbon powder CP is fed to the third carry-out port 54 by the screw conveyor 65 to be discharged outside the processed object housing body 51. Further, the generated water is discharged outside the processed object housing body 51 through a drain 55 or the like, for example.

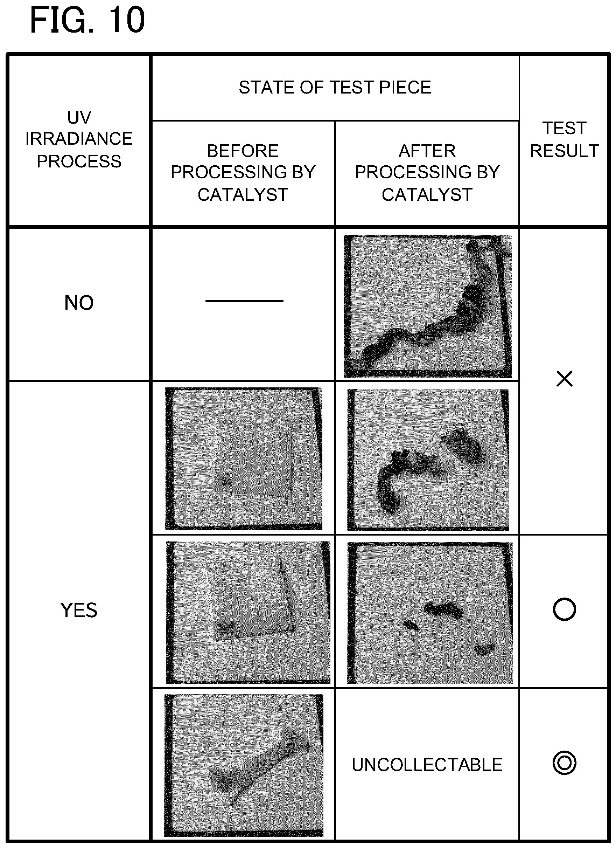

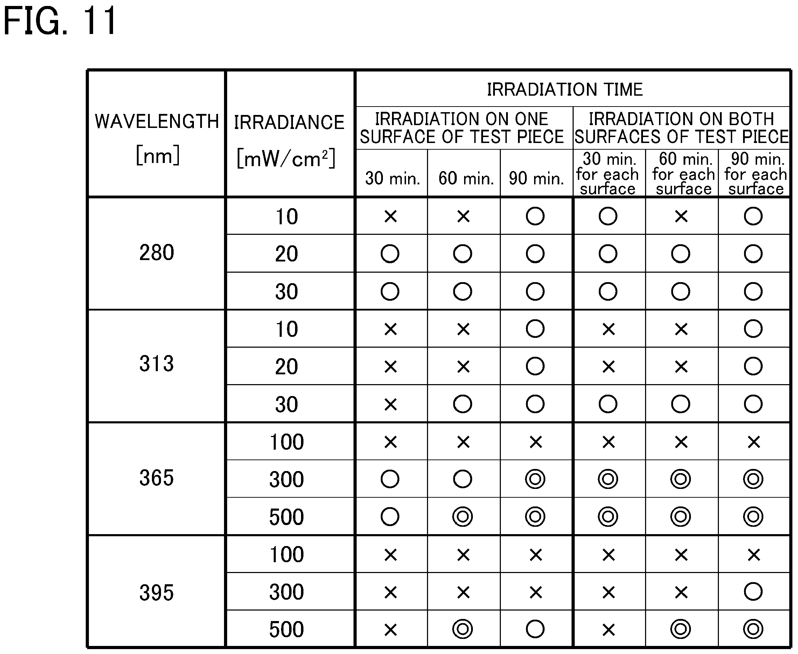

Next, inspection experiments have been performed for confirming effect of the recycling method of the organic waste according to the present embodiment. FIG. 10 is a table showing a determination reference of results of the inspection experiments for confirming the effect of the recycling method of the organic waste according to the embodiment. FIG. 11 is a table showing the results of the inspection experiments as a continuation of FIG. 10.

### <Experimental Method>

In the experiments, a resin product (a band with a thickness of less than 1 mm used for corrugated containers for packing) made of polypropylene (PP) which is said to be the most difficult resin to decompose its configuring molecule is used as a test piece. This test piece is formed in a square shape with each side of 10 mm and the test piece is irradiated with the ultraviolet UV by the ultraviolet irradiation unit 21 for a certain time. Subsequently, the test piece after irradiation of the ultraviolet UV is put in a glass-made container in which the catalyst 90 is put enough so that the test piece after irradiation of the ultraviolet UV and the catalyst 90 are housed in the container to be in contact with each other. Subsequently, this container, in which the test piece after irradiation of the ultraviolet UV and the catalyst 90 are put, is set still in a thermostatic chamber adjusted its temperature to 180°C for one hour in a state that the test piece and the catalyst 90 remain contacted.

### <Experimental Conditions>

A light source for the ultraviolet irradiation unit 21; ultraviolet LED illuminator
An ultraviolet irradiation unit 21; using four types of ultraviolet LED illuminator for each wavelength λ
Wavelength λ (nm); 280, 313, 365, 395
Irradiance (mW / cm²) when the wavelength λ is 280 (nm) and 313 (nm); 10, 20, 30
Irradiance (mW / cm²) when the wavelength λ is 365 (nm) and 395 (nm); 100, 300, 500
A surface of a test piece irradiated with the ultraviolet UV; one surface, both surfaces
Irradiation time (min.) of the ultraviolet UV; 30, 60, 90 for each one surface

### <Experimental Results>

FIG. 10 is a table showing a determination reference for the results of the inspection experiments for confirming the effects of the recycling method of the organic waste according to the present embodiment. In the experiments, as shown in FIG. 10, the results are evaluated with three phases of references of "⊚: impossible to collect (the test piece has been completely decomposed", " O : the test piece has been carbonized and largely decomposed", and " ×: the test piece has been carbonized but not enough to be decomposed (having similar decomposed level with a test piece which has not yet been irradiated with ultraviolet)". Herein, a symbol "⊚" used for evaluation represents a meaning of "very good." Similarly, a symbol "○" used for the evaluation represents a meaning of "good." Further, a symbol " × " used for the evaluation represents a meaning of "poor."

FIG. 11 is a table showing the results of the inspection experiments as a continuation of FIG. 10. According to the experimental results shown in FIG. 11, when the ultraviolet UV at the wavelength λ of 280 (nm) is irradiated under a condition of the irradiance of 10 (mW / cm²), the test piece could be decomposed when the irradiation time of the ultraviolet UV is 90 (min.) for both cases of irradiating one surface and both surfaces. Further, under the condition of the irradiance of 20 (mW / cm²) or more, the test piece could be almost decomposed with the irradiation time of 30 (min.) of the ultraviolet UV even when the irradiation of the ultraviolet UV is applied only on one surface.

Further, when the ultraviolet UV at the wavelength λ of 313 (nm) is irradiated, the test piece could be decomposed, but the irradiation time of the ultraviolet UV required for decomposing the test piece became longer than the case of irradiating the ultraviolet UV at the wavelength λ of 280 (nm).

When the ultraviolet UV at the wavelength λ of 365 (nm) is irradiated under a condition of the irradiance of 100 (mW / cm²), the test piece was decomposed, but the irradiance time of the ultraviolet UV required for decomposing the test piece became long. Under each condition of the irradiance of 300 and 500 (mW / cm²), the test piece could be almost decomposed for the irradiation time of 30 (min.) of the ultraviolet UV even when the irradiation of the ultraviolet UV was made only on one surface. When the irradiation of the ultraviolet UV was made on both surfaces, the test piece was completely decomposed.

However, under the condition of the irradiance of 300 (mW / cm²), no thermal deformation of the test piece was generated by the irradiation of the ultraviolet UV, but under the condition of the irradiance of 500 (mW / cm²), the test piece got dissolved when the irradiation time of the ultraviolet UV became 90 (min.).

Further, when the ultraviolet UV at the wavelength λ of 395 (nm) is irradiated under a condition of the irradiance of 500 (mW / cm²), the test piece was preferably decomposed in both cases of irradiating the ultraviolet UV on one surface and on both surfaces for the irradiation time of 60 (min.) or more. However, ability of decomposing the test piece by irradiation of the ultraviolet UV has generally become lower than the case of irradiating the ultraviolet UV at the wavelength λ of 365 (nm).

### (Consideration)

The experiment results show that there is no large differences in the ability of decomposing the test piece in comparing irradiating the ultraviolet UV on one surface and irradiating on both surfaces to the test piece in any irradiation time duration of 30, 60, and 90 (min.) of the ultraviolet UV. A reason for this is assumed that the test piece could be irradiated with the ultraviolet UV with the irradiation energy amount large enough to decomposing the test piece only by irradiating one surface of the test piece.

Especially in the recycling apparatus 1, the waste processed object 92 as the resin waste has been segmentalized into small pieces in advance, and in the first conveyance path 36 of the feeding conveyor 35, the waste processed object 92 is placed on a surface for receiving the ultraviolet UV with adjusted its arrangement state by the arrangement adjusting device 30. Accordingly, as shown in FIG. 1, it is conceived that the waste processed object 92 can absorb enough energy of the ultraviolet UV for decomposition only from the ultraviolet irradiation surface 22 of the ultraviolet irradiation unit 21 that is set on an upper side of the first conveyance path 36.

Further, the test piece can be decomposed at the wavelength λ in the order of 280 (nm), 313 (nm), 365 (nm), and 395 (nm) with relatively small irradiance (mW / cm²) and the integral of light (mJ / cm²).

Therefore, it is considered that decomposition processing of the waste processed object 92 can further be efficiently performed with shorter wavelength λ of the ultraviolet UV even if the waste resin product 91 (the waste processed object 92) including a product made of polypropylene (PP) which is said to be the most difficult to decompose the configuring molecules among resins. Especially when the integral of light (mJ / cm2) is higher, it is assumed that the irradiation time (min.) of the ultraviolet UV becomes shorter, and thus the waste processed object 92 can be efficiently decomposed.

Next, operations and effects of the recycling apparatus 1 of the organic waste and a method of recycling the organic waste according to the present embodiment is explained.

The recycling apparatus 1 of the present embodiment is comprises: a catalyst 90 to make carbonization of an organic waste (the waste resin product 91 and the waste processed object 92) targeted for waste disposal; an ultraviolet irradiation unit 21 configured to irradiate ultraviolet UV at a wavelength λ which is enough for breaking bonding of molecules configuring the organic waste 91; a processed object housing body 51 housed its interior space 52 with the catalyst 90; a heater 81 provided in the interior space 52; and a stirring portion 71 provided in the interior space 52, wherein, the organic waste 92 is the one made by crushing the waste resin product 91 into small pieces, the catalyst 90 is formed under a temperature of 160 to 200°C by sulfonation treatment of any one of: a first mixture formed of at least any one of granular activated charcoal, carbon powder, and Binchotan charcoal mixed with any one of concentrated sulfuric acid and oleum, and a second mixture formed of a chip of wood, of which outer layer is intermolecularly dehydrated, mixed with any one of the concentrated sulfuric acid and the oleum, and in the processed object housing body 51, the organic waste 92 after ultraviolet UV irradiation by the ultraviolet irradiation unit 21 and the catalyst 90, which are carried in the interior space 52, are in contact with each other to be stirred by the stirring portion 71.

According to this feature, as mentioned above, even when the easy-to-be-decomposed resin material and the difficult-to-be-decomposed resin material coexist as the collection of the waste resin products 91 which are desired to be recycled, the waste processed objects 92 formed by crushing the waste resin products 91 can be regenerated as the carbon powder CP and recycled.

Namely, the easy-to-be-decomposed resin material has the physical property of being relatively easy to be decomposed among resins as exemplified with polycarbonate (PC), polystyrene (PS), polyamide (PA), and others. In the interior space 52 of the processed object housing body 51, the waste resin products 91 (the waste processed objects 92) made of the easy-to-be-decomposed resin material among the collection of the waste resin products 91 can be carbonized enough only by the catalyst 90 and altered into the carbon powder CP even if the products 91 do not especially receive the ultraviolet UV.

On the other hand, the difficult-to-be-decomposed resin material has the physical property of being especially hard to decompose its configuring molecules among resins exemplified with polyethylene (PE), polypropylene (PP), and polyethylene terephthalate (PET). Accordingly, in the interior space 52 of the processed object housing body 51, the waste resin products 91 (the waste processed objects 92) made of the difficult-to-be-decomposed resin material among collection of the waste resin products 91 are decomposed their configuring molecules to some extent or completely by the irradiation of the ultraviolet UV and then stirred with the catalyst 90 to be carbonized and altered into the carbon powder CP.

Therefore, even when the easy-to-be-decomposed resin material and the difficult-to-be-decomposed resin material coexist in the collection of the waste resin products 91, the waste processed objects 92 can be simply altered into the carbon powder CP by processing as it is by the recycling apparatus 1 irrespective of types of resin materials. Furthermore, the carbon powder CP can be formed only by processing the waste processed objects 92 by the recycling apparatus 1, and thus processing cost for the waste processed objects 92 is remarkably inexpensive.

In addition, in the recycling apparatus 1 and the recycling method of the organic waste according to the present embodiment, there is no toxic gas such as dioxin generated in the reaction process while the waste processed objects 92 are stirred with the catalyst 90 to form the carbon powder CP. Accordingly, the recycling apparatus 1 does not need to take safety measures to prevent especially toxic gas from being released outside in view of safety and sanitation. Namely, the recycling apparatus 1 achieves an eco-friendly apparatus. Moreover, the recycling apparatus 1 does not require this safety measures, thus achieving further reduction in the apparatus cost.

Therefore, according to the recycling apparatus 1 of the present embodiment, even when the organic waste product (the waste resin products 91, the waste processed objects 92) to be wasted includes the resin products made of the material which is said to be hard to decompose as exemplified with polyethylene, polypropylene, and others, the waste product can be easily recycled as the carbon powder CP with inexpensive cost, which is the remarkable effect. Further, the recycling method of the organic waste according to the present embodiment has also the same effect with the recycling apparatus 1 according to the present embodiment.

Further, in the recycling apparatus 1 according to the present embodiment, as an arrangement configuration of the organic waste 92 that receives the ultraviolet UV from the ultraviolet irradiation unit 21, the apparatus comprises an arrangement adjusting member 30 configured to adjust the arrangement configuration of the organic waste 92 to be supplied to the ultraviolet irradiation unit 21 to any one of a single-layered state and a laminated state by two layers at most by overlapping the organic wastes 92.

According to the above feature, when the waste processed object 92 to be supplied to the ultraviolet irradiation unit 21 is to be decomposed its configuring molecules, the ultraviolet UV can be further surely irradiated on a surface of the waste processed object 92 of a piece-like shape with reducing the irradiation loss. Therefore, even when the waste resin product 91 is made of the difficult-to-be-decomposed resin material having the physical property of being especially difficult to decompose the configuring molecules as exemplified with polyethylene (PE), polypropylene (PP), polyethylene terephthalate (PET), and others among resins, the waste processed objects 92 after irradiation of the ultraviolet can be decomposed its configuring molecules in a state in which the yield is kept high.

Further, in the recycling apparatus 1 according to the present embodiment, the apparatus comprises a first conveyance member 35 configured to feed the organic waste 92 through a first conveyance path 36, and the ultraviolet irradiation member extends along the first conveyance path 36.

According to the above feature, in the interior space 52 of the processed object housing body 51, when the waste processed object 92 that has been finished with irradiation of the ultraviolet UV and the catalyst 90 are stirred to form the carbon powder CP, the following waste processed object 92 succeeds to be supplied and can be successively performed with the decomposition process by irradiation of the ultraviolet UV in the ultraviolet irradiation unit 21. Accordingly, when recycling the waste processed object 92 into the carbon powder CP, the recycling apparatus 1 can smoothly and successively carry out irradiation of the ultraviolet UV to the waste processed object 92 and formation of the carbon powder CP at the same time with high processing ability of about 1m³ / hour as one example of the waste resin product 91 which was put in the crushing device 10.

Further, in the recycling apparatus 1 according to the present embodiment, the processed object housing body 51 is provided with a product discharge portion (61) formed of an enveloping member 62 of a tubular shape centering about an axis AX extending in a horizontal direction HZ, the enveloping member 62 is configured to obstruct circulation of the catalyst 90 but includes a clearance m formed large enough to allow circulation of a carbon product CP generated by reaction of the organic waste 92 after the ultraviolet UV irradiation and the catalyst 90 in the interior space 52, and as a second conveyance path 66, a screw conveyor 65 configured to deliver the carbon product CP outside the processed object housing body 51 is provided inside the enveloping member 62.

According to the above feature, when the carbon powder CP formed in the interior space 52 is to be discharged outside the processed object housing body 51, the catalyst 90 remaining in the interior space 52 and the carbon powder CP can be easily divided by the product discharge portion 61 configured with a simple structure. Moreover, the carbon powder CP discharged out of the processed object housing body 51 is highly precise in its grain size.

Further, in the recycling apparatus 1 according to the present embodiment, the organic waste is a resin product (the waste resin product 91 and the waste processed object 92) which has become an object to be wasted.

According to the above feature, the recycling apparatus 1 may be used in various facilities requiring formation of the product from the organic waste as facilities aiming for recycling resources, for example, facilities recovering wastes mainly through local municipalities, supermarkets, and others and facilities of food makers, various industrial manufacturers, and others which perform processing at their own plants.

As a result of this, the recycling apparatus 1 can largely contribute to recycling further more resin products into resources from the waste resin products 91, a large amount of which is recovered by municipalities or the like. Further, as similar to the recycling apparatus 1 of the present embodiment, the recycling method of the organic wastes according to the present embodiment can also largely contribute to recycling further more resin products into resources.

As mentioned above, the present disclosure has been explained in line with the embodiment, but the present disclosure is not limited to the above embodiment and may be applied with any appropriate modifications without departing from the scope of the disclosure.

For example, in the embodiment, the recycling apparatus 1 successively processing the waste resin products 91 (the waste processed objects 92) as shown in FIG. 1 is exemplified as a recycling apparatus of an organic waste according to the present disclosure. Alternatively, the recycling apparatus of the organic waste according to the present disclosure may be a processed product housing member which stirs catalyst and organic waste after irradiation of ultraviolet in an interior space by batch processing.

Further, the recycling apparatus 1 is configured with the ultraviolet irradiation unit 21 to irradiate light in an ultraviolet region as a wavelength which can break bonding of molecules configuring the waste resin products 91 (the waste processed objects 92). Alternatively, when bonding of the molecules configuring the waste processed objects 92 is to be broken, the breaking process of the molecule bonding may be performed by irradiation of visible ray, even though this apparatus is not applicable to the recycling apparatus of the organic wastes according to the present disclosure. However, irradiation of the visible ray is not highly efficient in the breaking process.

Further, in the embodiment, the organic wastes are defined as resin-made wastes targeted for waste disposal. Alternatively, in the recycling apparatus of the organic wastes and its recycling method according to the present disclosure, the organic wastes to be processed may be any one of grocery wastes, wastes of sea foods, used disposable chopsticks, and others generated in food makers, supermarkets, and the like as long as they are formed by organic materials.

### INDUSTRIAL APPLICABILITY

As clear from the above explanation, a recycling apparatus of organic wastes and its recycling method according to the present disclosure may be utilized in facilities of disposing and processing organic wastes targeted for waste disposal and facilities of processing those for reuse.

### REFERENCE SIGNS LIST

- 1: Recycling apparatus
- 21: Ultraviolet irradiation unit (ultraviolet irradiation member)
- 30: Arrangement adjusting device (arrangement adjusting member)
- 35: Feeding conveyor (first conveyance member)
- 36: First conveyance path (first conveyance path)
- 51: Processed object housing body (processed object housing member)
- 52: Interior space
- 61: Product discharge portion
- 62: Enveloping member
- 65: Screw conveyor (second conveyance member)
- 66: Second conveyance path (second conveyance path)
- 71: Stirring portion (stirring member)
- 81: Heater (heating member)
- 90: Catalyst
- 91: Waste resin products (organic wastes)
- 92: Waste processed objects (organic wastes)
- m: Clearance
- CP: Carbon powder (product)
- AX: Axis
- UV: Ultraviolet
- HZ: Feeding direction, horizontal direction

## Claims

1. An organic waste recycling apparatus comprising:
a catalyst to make carbonization of an organic waste targeted for waste disposal;
an ultraviolet irradiation member configured to irradiate ultraviolet at a wavelength which is enough for breaking bonding of molecules configuring the organic waste;
a processed object housing member housed its interior space with the catalyst;
a heating member provided in the interior space; and
a stirring member provided in the interior space, wherein,
the organic waste is crushed into small pieces,
the catalyst is formed under a temperature of 160 to 200°C by sulfonation treatment of any one of:
a first mixture formed of at least any one of granular activated charcoal, carbon powder, and Binchotan charcoal mixed with any one of concentrated sulfuric acid and oleum, and
a second mixture formed of a chip of wood, of which outer layer is intermolecularly dehydrated, mixed with any one of the concentrated sulfuric acid and the oleum, and
in the processed object housing member, the organic waste after ultraviolet irradiation by the ultraviolet irradiation member and the catalyst, which are carried in the interior space, are in contact with each other to be stirred by the stirring member.

2. The organic waste recycling apparatus according to claim 1, wherein
as an arrangement configuration of the organic waste that receives the ultraviolet from the ultraviolet irradiation member, the apparatus comprises an arrangement adjusting member configured to adjust the arrangement configuration of the organic waste to be supplied to the ultraviolet irradiation member to any one of a single-layered state and a laminated state by two layers at most by overlapping the organic wastes.

3. The organic waste recycling apparatus according to claim 1 or 2, wherein
the apparatus comprises a first conveyance member configured to feed the organic waste through a first conveyance path, and
the ultraviolet irradiation member extends along the first conveyance path.

4. The organic waste recycling apparatus according to any one claims 1 to 3, wherein
the processed object housing member is provided with a product discharge portion formed of an enveloping member of a tubular shape centering about an axis extending in a horizontal direction,
the enveloping member is configured to obstruct circulation of the catalyst but includes a clearance formed large enough to allow circulation of a product generated by reaction of the organic waste after the ultraviolet irradiation and the catalyst in the interior space, and
as a second conveyance path, a second conveyance member configured to deliver the product outside the processed object housing member is provided inside the enveloping member.

5. The organic waste processing apparatus according to any one of claims 1 to 4, wherein the organic waste is a resin product which has become an object to be wasted.

6. An organic waste recycling method of recycling an organic waste targeted for waste disposal by use of a catalyst for making carbonization,
the method includes:
a first step of continuously irradiating ultraviolet on the organic waste that has been pulverized at a wavelength which is enough for breaking bonding of molecules configuring the organic waste for a first predetermined period of time,
a second step of supplying the organic waste after irradiation of the ultraviolet in the first step to an interior space of a processed object housing member and continuously stirring the organic waste after ultraviolet irradiation and the catalyst in the interior space for a second predetermined period of time under a heated condition of the interior space at an ambient temperature in a temperature zone of 80 to 200°C, and
a third step of discharging a product formed by reaction of the organic waste and the catalyst in the second step to outside the processed object housing member, and
the catalyst is formed under a temperature of 160 to 200°C by sulfonation treatment of any one of:
a first mixture of any one of granular activated charcoal, carbon powder, and Binchotan charcoal mixed with any one of concentrated sulfuric acid and oleum; and
a second mixture of a chip of wood, of which an outer layer is intramolecularly dehydrated, mixed with any one of concentrated sulfuric acid and oleum.

7. The organic waste recycling method according to claim 6, wherein the organic waste is a resin product targeted for waste disposal.
